# EUROPEAN PATENT APPLICATION

(11) **EP 2 573 046 A1**
(43) Date of publication of application: **27.03.2013**
(21) Application number: 12184279.3
(22) Date of filing: 13.09.2012
(51) Int. Cl.: C01B 25/45, C01B 25/455, H01M 4/58, H01M 10/052, H01M 4/583

(54) **Positive electrode active material (LiVPO4F - Lithium vanadium fluorophosphate) production method, positive electrode, and storage device**

(30) Priority: 21.09.2011 JP 2011205605
(71) Applicant: Fuji Jukogyo Kabushiki Kaisha, Tokyo 160-8316 (JP)
(72) Inventor: Mukainakano, Yuya, Tokyo, 160-8316 (JP); Ishii, Rikitaro, Tokyo, 160-8316 (JP); Shiozaki, Ryuji, Tokyo, 160-8316 (JP)
(74) Representative: Sajda, Wolf E.

(57) **Abstract**

There is provided a positive electrode active material production method, a positive electrode, and a storage device. A production method of a positive electrode active material having a LiVPO₄F-type crystal structure and containing carbon, includes: a step of synthesizing a precursor that has VPO₄ containing carbon, from a starting material in the form of vanadium pentoxide and a phosphate compound, and from a carbon material as an additive; and a step of synthesizing LiVPO₄F containing carbon, from the precursor and LiF. The carbon material as an additive is conductive carbon black having a specific surface area of 700 to 1500 m²/g, and in the step of synthesizing the precursor, an addition amount of the conductive carbon black is less than 2 moles per mole of vanadium pentoxide.

## Description

### BACKGROUND OF THE INVENTION

### 1. Field of the Invention

The present invention relates to a positive electrode active material production method, a positive electrode, and a storage device. More particularly, the present invention relates to a production method of a positive electrode active material having LiVPO₄F as a main component, and to a positive electrode produced in accordance with the production method, and a storage device produced using the positive electrode.

### 2. Description of the Related Art

In recent years, lithium ion storage devices such as lithium ion secondary batteries or the like have come to be used in various fields, for instance automobiles and portable devices related to information and communications. In such lithium ion storage devices, a composition having a LiVPO₄F-type crystal structure may be used as the material that is utilized as the positive electrode active material.

Japanese Unexamined Patent Application Publication JP-A-2009-018 989 discloses an example of a production method of LiVPO₄F. In particular, Japanese Patent Application Publication JP-A-2009-018 989 discloses a method that involves synthesizing VPO₄, which is a precursor of LiVPO₄F, in a first stage, and synthesizing then, in a second stage, LiVPO₄F as an active material, using VPO₄ and LiF.

The disclosed method is a carbon thermal method in which carbon is added to V₂O₅ and NH₄H₂PO₄, as starting material substances, and the whole is fired, with further firing of the formed VPO₄ to yield LiVPO₄F, according to Formula (I) and Formula (II) below for the first stage and the second stage, respectively.

0.5V₂O₅+NH₄H₂PO₄+C → VPO₄+NH3+1.5H₂O+CO (I)

LiF+VPO₄ → LiVPO₄F (II).

Further, Journal of Power Sources 146 (2005) 516-520, Journal of The Electrochemical Society 151 (10) A1670-A1677 (2004) and Electrochimica Acta 56 (2011) 1344-1351 disclose a production method of LiVPO₄F from starting material substances according to reaction formulas given by Formula (III) and Formula (IV) below.

V₂O₅+2(NH₄)₂HPO₄+xC → 2VPO₄/{(x-2)}/2}C+4NH₃+3H₂O+2CO (III)

LiF+VPO₄/{(x-2)}/2}C → LiVPO₄F/{(x-2)}/21C (IV).

In the first-stage reaction formula of Journal of Power Sources 146 (2005) 516-520, Journal of The Electrochemical Society 151 (10) A1670-A1677 (2004) and Electrochimica Acta 56 (2011) 1344-1351, the coefficient x that multiplies the carbon C denotes the molar ratio of the added carbon with respect to V₂O₅. The carbon addition amount x is set to be greater than 2. That is, carbon is added in an amount greater than 2 moles per mole of starting material V₂O₅.

### In the first stage in Japanese Patent Application Publication

JP-A-2009-018 989, reactions result from setting theoretically the addition amount of carbon to 1 mole with respect to 0.5 moles of V₂O₅, as indicated by the reaction formulas. In the light of Example 2 and others in Japanese Patent Application Publication JP-A-2009-018 989, it is found that in fact 1.1 moles of carbon are added for 0.5 moles of V₂O₅.

In Journal of Power Sources 146 (2005) 516-520, Journal of The Electrochemical Society 151 (10) A1670-A1677 (2004) and Electrochimica Acta 56 (2011) 1344-1351 as well, carbon is added in an amount greater than 2 moles per 1 mole of V₂O₅. That is because, although LiVPO₄F affords high capacity, LiVPO₄F exhibits also high electric resistance.

Accordingly, the electric resistance of LiVPO₄F must be reduced in order to for the latter to function in a storage device. Electric resistance is correlated with discharge retention rate in that, ordinarily, the discharge retention rate increases as the resistance value becomes lower.

Therefore, carbon was added in excess in order to enhance the conductivity of LiVPO₄F as the active material, although, in terms of reducing V₂O₅, the theoretical addition amount of carbon need only be twice the molar ratio of V₂O₅.

A greater addition amount of carbon, however, translates into a lower proportion of active material in the positive electrode material, i.e. a lower proportion of LiVPO₄F as a crystal. The capacity of the positive electrode decreases as a result. A lower positive electrode capacity results in turn in a lower energy density in the storage device.

### SUMMARY OF THE INVENTION

In the light of the above, it is an object of the present invention to provide a production method of LiVPO₄F in which sufficient conductivity is afforded without excessive addition of carbon. A further object is to provide a storage device having a high-capacity positive electrode and boasting high-energy density, through the use of such LiVPO₄F.

In order to solve the above problems, an aspect of the present invention provides a production method of a positive electrode active material having a LiVPO₄F-type crystal structure which, according to the present invention, is a production method of a positive electrode active material having a LiVPO₄F-type crystal structure and containing carbon. The production method includes: a step of synthesizing a precursor that has VPO₄ containing carbon, from a starting material in the form of vanadium pentoxide and a phosphate compound, and from a carbon material as an additive; and a step of synthesizing LiVPO₄F containing carbon, from the precursor and LiF.

The carbon material as an additive is conductive carbon black having a specific surface area of 700 to 1500 m²/g, and in the step of synthesizing the precursor, an addition amount of the conductive carbon black is less than 2 moles per mole of vanadium pentoxide.

Another aspect of the present invention provides a production method of a positive electrode active material having a LiVPO₄F-type crystal structure and containing carbon.

The production method includes: a step of synthesizing a precursor that has VPO₄ containing carbon, from a starting material in the form of vanadium pentoxide and a phosphate compound, and from a carbon material as an additive; and a step of synthesizing LiVPO₄F containing carbon, from the precursor and LiF, wherein the carbon material as an additive is conductive carbon black having a specific surface area of 700 to 1500 m²/g, and in the step of synthesizing a precursor, conductive carbon black is added such that in the step of synthesizing LiVPO₄F, the carbon amount contained in LiVPO₄F is not greater than 5 wt% with respect to LiVPO₄F.

In the present invention, conductive carbon black having a specific surface area 700 to 1500 m²/g, in the form of Ketjen black, is used as the carbon material that is added to the starting material substances in the precursor synthesis step.

As a result, this allows imparting sufficient conductivity as required in order for the carbon material to be used as an electrode material in a positive electrode active material having LiVPO₄F as a main component, as compared with an instance in which there is used another carbon material such as carbon black.

The precursor according to the present invention is preferably used in an electrode for storage devices or in a storage device that uses the electrode.

Through the use of conductive carbon black having a specific surface area 700 to 1500 m²/g, in the form of Ketjen black, as the carbon material that is added to the starting material substance in the precursor synthesis step, the present invention allows imparting sufficient conductivity to a positive electrode active material LiVPO₄F, even if the addition amount of Ketjen black is small, as compared with an instance in which there is used another carbon material such as carbon black.

Decreases in positive electrode capacity, which occur through increases in the content of carbon in the positive electrode active material LiVPO₄F, are prevented as a result, and, in consequence, the energy density of the storage device is enhanced.

### BRIEF DESCRIPTION OF THE DRAWINGS

- FIG. 1: is a flowchart for explaining the flow of various processes in an embodiment;
- FIG. 2: is a cross-sectional diagram illustrating schematically the interior of a storage device according to the embodiment;
- FIG. 3: illustrates XRD measurement results for VPO₄ corresponding to respective instances of varying addition amount of Ketjen black, used as a carbon material;
- FIG. 4: illustrates XRD measurement results for VPO₄ corresponding to respective instances of varying addition amount of carbon black, used as a carbon material;
- FIG. 5: illustrates XRD measurement results for LiVPO₄F corresponding to respective instances of varying addition amount of Ketjen black, used as a carbon material; and

- FIG. 6: illustrates XRD measurement results for LiVPO₄F corresponding to respective instances of varying addition amount of carbon black used as a carbon material.

### DESCRIPTION OF THE PREFERRED EMBODIMENTS

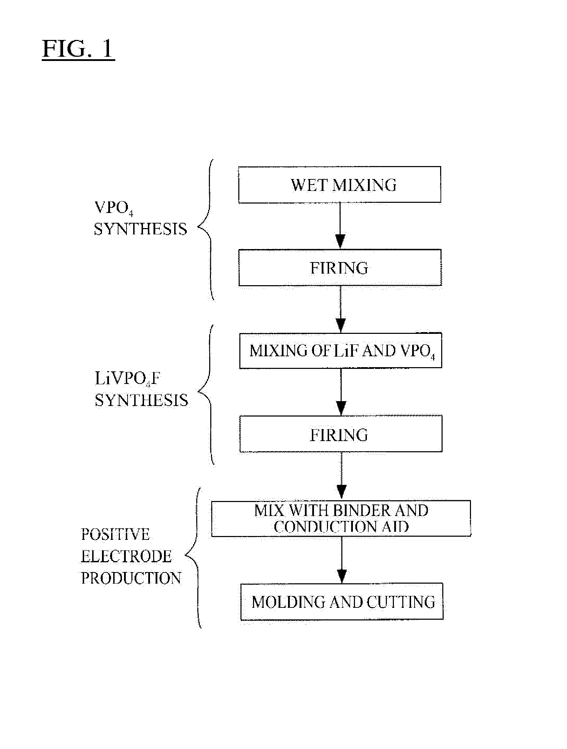

Embodiments of the present invention are explained next. FIG. 1 is a flowchart illustrating the flow of a production method of a positive electrode active material according to the present embodiment.

In the production method according to the present embodiment a precursor synthesis step is carried out first, as illustrated in the figure. In the precursor synthesis step there are mixed vanadium pentoxide and a phosphate compound, as a starting material, and Ketjen black (hereafter "KB" for short), which is a carbon material, as an additive.

Specifically, vanadium pentoxide and a phosphate compound, which are starting material substances, are wet-mixed using a mixed solvent that contains a hydrophilic alcohol (having three or fewer carbon atoms), for instance 2-propanol. The obtained mixture is fired, to cause a solid-phase reaction and synthesize a precursor that comprises VPO₄.

The abovementioned firing includes a pre-firing step of performing a thermal treatment at a temperature ranging from 200 °C to 400 °C in an inert atmosphere, and a main treatment step in which a thermal treatment is performed at a temperature ranging from 800 °C to 900 °C, in an inert atmosphere.

The inert atmosphere herein is an inert gas stream of, for instance, nitrogen or a noble gas such as helium or argon. Preferably, the thermal treatment during pre-firing takes place, for instance, for 2 to 6 hours at a temperature of about 300 °C, and the thermal treatment in main firing takes place for about 16 hours at a temperature of about 800 °C.

A precursor having VPO₄ as a main component is obtained as a result of the above-described mixing step and firing step. The content of impurities such as V₂O₃ in the precursor according to the present embodiment is very small.

For instance, the produced precursor has a proportion of generated impurities having VO-bonds, as quantified based on X-ray diffraction patterns, smaller than 5 % with respect to VPO₄ as the main component. The capacity characteristic and energy density of the positive electrode active material are enhanced by reducing thus the proportion of impurities that have VO bonds.

Preferably, the blending ratio of water in the mixed solvent is adjusted so as to range between 2 to 9 moles with respect to V₂O₅ as the starting material substance. Preferably, the mixed solvent is fed to an amount of 100 % to 200 % with respect to the mass of the starting material (V₂O₅ and (NH₄)₂HPO₄). The feeding amount of the mixed solvent is adjusted by regulating the amount of 2-propanol that is mixed with water.

The phosphate compound as a starting material substance used in the present embodiment is (NH₄)₂HPO₄, which is an ammonium phosphate compound. The mixing molar ratio of vanadium pentoxide V₂O₅ and the phosphate compound (NH₄)₂HPO₄ is 1:2.

In the present embodiment, the addition amount of KB is set to be smaller than 2 moles per mole of V₂O₅, i.e. the molar ratio of KB with respect to V₂O₅ (hereafter notated as molar ratio N) is set to 2. The addition amount of KB in the present embodiment is thus set to be lower than the ordinary addition amount of a conventional carbon material such as carbon black.

In the LiVPO₄F synthesis step, next, a positive electrode active material LiVPO₄F containing carbon is obtained from LiF and from the precursor VPO₄ obtained in the precursor synthesis step.

Specifically, for instance, LiF and VPO₄ are mixed at an appropriate mixing ratio using a ball mill, the resulting powdery mixture is pelletized next, and the pellets are then heated in an inert atmosphere. This is followed by cooling, after which the obtained pellets are pulverized. A powder of LiVPO₄F as the positive electrode active material is obtained as a result.

Low resistivity, i.e. high conductivity is achieved despite the fact that the KB addition amount in the obtained positive electrode active material LiVPO₄F is smaller than the addition amount of other conventional carbon materials.

Therefore, producing a storage device by using such LiVPO₄F makes it possible to prevent a decrease in discharge capacity that arise from increased electrode resistance, and to prevent also a decrease in discharge capacity retention rate, while preventing a decrease in capacity that might arise on account of a reduced addition amount of carbon material.

The positive electrode active material LiVPO₄F is mixed with a binder that comprises polyvinylidene fluoride (PVDF), and with KB as a conduction aid; a slurry of the foregoing is formed using N-methyl-2-pyrrolidinone (NMP) as a solvent; and the obtained slurry is molded and cut up. A positive electrode active material layer for storage devices can be obtained as a result that comprises the abovementioned positive electrode active material LiVPO₄F.

An explanation follows next on the construction of a storage device (lithium ion storage device) that is produced using the positive electrode active material LiVPO₄F according to the present embodiment.

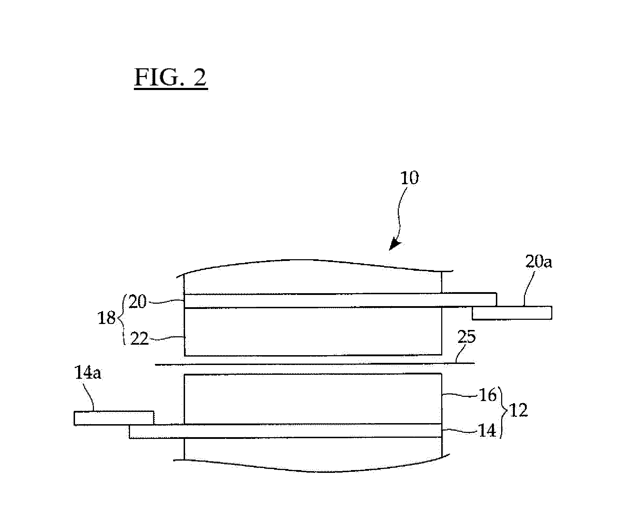

FIG. 2 is a diagram for explaining the structure of a lithium ion storage device 10. The lithium ion storage device 10 according to the present embodiment is a device provided with a positive electrode 18 comprising the abovementioned positive electrode active material LiVPO₄F into which lithium ions can be doped and from which lithium ions can be de-doped, a negative electrode 12 having a negative electrode active material into which lithium ions can be doped and from which lithium ions can be de-doped, and a nonaqueous electrolyte solution (not shown) filled between the positive electrode 18 and the negative electrode 12, wherein charging and discharge are performed through migration of lithium ions between the positive electrode 18 and the negative electrode 12, and current can be extracted during discharge.

As used herein, the term "doping" includes conceptually storage, intercalation, adsorption, support and so forth, and the term "de-doping" includes conceptually reverse processes of the foregoing. The lithium ion storage device may be for instance, a lithium ion secondary battery or the like.

As the nonaqueous electrolyte solution there is used an electrolyte solution in which an electrolyte in the form of an ordinary lithium salt is dissolved in a solvent. The electrolyte and the solvent are not particularly limited.

For instance, the electrolyte that is used may be LiClO₄, LiAsF₆, LiBF₄, LiPF₆, LiB(C₆H₅)₄, CH₃SO₃Li, CF₃SO₃Li, (C₂F₅SO₂)₂NLi, (CF₃SO₂)₂NLi or a mixture of the foregoing. These electrolytes may be used singly or in combinations of a plurality of types. In the present embodiment there is preferably used, in particular, LiPF₆ or LiBF₄.

As the solvent of the nonaqueous electrolyte solution there can be used a linear carbonate such as dimethyl carbonate (DMC), diethyl carbonate (DEC) or methyl ethyl carbonate (MEC); a cyclic carbonate such as ethylene carbonate (EC), propylene carbonate (PC), butylene carbonate (BC) or vinylene carbonate (VC); or a solvent having a comparatively low molecular weight such as acetonitrile (AN), 1,2-dimethoxyethane (DME), tetrahydrofuran (THF), 1,3-dioxolane (DOXL), dimethyl sulfoxide (DMSO), sulfolane (SL), propionitrile (PN), as well as mixtures of the foregoing.

Preferably, the solvent of the electrolyte solution in the present embodiment is a mixture of a linear carbonate and a cyclic carbonate. A mixture of two more types of linear carbonate and two or more types of cyclic carbonate may also be used. Fluoroethylene carbonate (FEC) or the like may also be added to the solvent, as the case may require.

A film-like separator 25 is stacked between the positive electrode 18 and the negative electrode 12. The separator 25 is impregnated with a nonaqueous electrolyte solution. In a case where the positive electrode and negative electrode are present as a plurality thereof, the positive electrode 18 and the negative electrode 12 are alternately stacked with each other.

A stacked-type electrode unit resulting from stacking on a flat plate or a wound-type electrode unit resulting from winding a stack can be used in the present embodiment.

The negative electrode 12 is made up of a collector 14 that comprises a metal substrate such as Cu foil or the like and is provided with a lead 14a for connection to an external circuit; and of a negative electrode active material layer 16 that is provided on one or both faces of the collector 14. The negative electrode active material layer 16 is formed through coating and drying of a slurry of a negative electrode active material, a binder and a conduction aid in a solvent such as NMP or the like.

The negative electrode active material is a substance into which lithium ions can be doped and from which lithium ions can be de-doped. As such there can be used a metal material, as well as a carbon material, or a metal material or alloy material or oxide that can store lithium ions, or a mixture of the foregoing. The particle size of the negative electrode active material ranges preferably from 0.1 µm to 30 µm.

Examples of the metal material include, for instance, silicon and tin. Examples of the alloy material include, for instance, silicon alloys and tin alloys. Examples of the oxide include, for instance, silicon oxide, tin oxide and titanium oxide. Examples of the carbon material include, for instance, graphite, non-graphitizable carbon, graphitizable carbon, or a polyacene-based organic semiconductor.

The foregoing materials may be used in the form of a mixture. The present invention is particularly effective in storage devices that have an alloy-based negative electrode that comprises silicon, tin or the like.

In the present embodiment, the positive electrode 18 is made up of a collector 20 that comprises a metal substrate such as A1 foil or the like and that is provided with a lead 20a for connection to an external circuit; and of a positive electrode active material layer 22, comprising the positive electrode active material LiVPO₄F, and provided on one or both faces of the collector 20.

### EXAMPLES

The present invention will be explained below in further detail based on examples and comparative examples. However, the present invention is not limited to the examples.

### Example 1

### Production of a Positive Electrode

### 1. Starting material substances

- V₂O₅: 90.94 g (0.5 moles)
- (NH₄)₂HPO₄: 132.06 g (1 mole)

### 2. Carbon material

- Ketjen black (KB): 3.0025 g (carbon 0.25 moles, i.e. molar ratio x = 0.5), specific surface area 1400 m²/g

### 3. Mixed solvent

Mixed solvent of 18.02 g of water (1.0 mole, i.e. blending ratio of water with respect to V₂O₅ = 2.0) and 316.48 g of 2-propanol. Therefore, the total mass of the mixed solvent is 334.5 g, which amounts to 150 % with respect to the mass 223 g of starting material.
(a) Herein, KB was added to the starting material V₂O₅ and (NH₄)₂HPO₄, and wet mixing was performed for 3 hours using the abovementioned mixed solvent of water and 2-propanol.
(b) The obtained mixture was subjected to a thermal treatment for 2 hours at about 300 °C in an argon atmosphere.
(c) Thereafter, the mixture was likewise subjected to a further thermal treatment for 16 hours at about 800 °C in an argon atmosphere. About 145.9 g of a precursor A were synthesized after solid-phase reaction.
(d) An XRD measurement (X-ray diffraction measurement) and resistivity measurement were performed on the precursor A. The main component of the precursor A was VPO₄. The resistivity measured using a resistivity measuring instrument by (Electrochemical measurement system HZ3000, by Hokuto Denko), yielded a value of 1.2 x 10¹⁰ Ω·cm.
(e) Using a ball mill, LiF: 25.94 g was mixed with the precursor A: 145.9 g (i.e. to yield a VPO₄ to LiF molar ratio of 1:1), with mixing for 1 hour in a 2-propanol solvent.
(f) The obtained mixture was subjected to a thermal treatment for 1 hour at about 670 °C in an argon atmosphere, to yield a powder of a positive electrode active material A.
(g) The components in the obtained powder of the positive electrode active material A were measured by XRD analysis. The main component was LiVPO₄F.
(h) The resistivity of the powder of the positive electrode active material A was measured using a resistivity measuring instrument. The resistivity value was 6.1 x 10⁹ Ω·cm.
(i) The carbon amount (wt%) contained in the positive electrode active material A was measured. The carbon amount was measured in accordance with a high-frequency combustion / infrared absorption method (model IR-412, by LECO). The carbon amount was 0.9 wt%.
(j) The powder of positive electrode active material LiVPO₄F obtained in (f) was mixed with a binder comprising polyvinylidene fluoride (PVDF) and with Ketjen black as a conduction aid, to a mass ratio of 90:5:5, and a slurry of the foregoing was prepared using N-methyl-2-pyrrolidinone (NMP) as a solvent.

Thereafter, this slurry was uniformly coated and molded, to yield a pore density of 2 g/cm³, and was cut to a 24 × 36 mm square, to yield a positive electrode A comprising a positive electrode active material layer made up of the positive electrode active material LiVPO₄F.

### Production of a Negative Electrode

A slurry was prepared by mixing graphite and PVDF, as a binder, at a mass ratio 94:6, and by diluting the mixture with NMP. This slurry was coated uniformly onto one or both faces of a copper-made collector having through-holes, to a mix density of 1.5 mg/cm³ per side. The coated collector was molded, and was cut to a 26 mm × 38 mm square, to prepare a negative electrode.

### Production of a Battery

Twelve positive electrodes A and twelve negative electrodes (two of which with single-side coating) resulting from the above-described processes, were stacked with separators, in the form of sheets of a polyolefin-based porous film, interposed in between. The two single-side coated negative electrodes were coated on the outermost layer.

A lithium electrode, resulting from causing metallic lithium to adhere onto a stainless-steel porous foil was stacked on the outermost layer, with a further separator interposed in between, to produce thereby an electrode stack unit that comprised the positive electrodes A, the negative electrodes, the lithium electrode and the separators.

This electrode stack unit was packaged using an aluminum laminate film, and then an electrolyte solution, resulting from dissolving lithium fluoroborate (LiBF₄), to 1 mole/L, in ethylene carbonate (EC) and diethyl carbonate (DEC) at a 1/3 mass ratio, was poured into the package. A lithium ion secondary battery A was assembled as a result.

### Discharge Capacity Measurement

The produced lithium ion secondary battery A was left to stand for 20 days. Thereafter, a one-cell battery of the lithium ion secondary battery A was used to measure discharge capacity per active material (mAh/g of active material), at 0.1 C discharge, as an index of battery capacity. The capacity of the lithium ion secondary battery A was 100 mAh/g per active material.

### Examination of Discharge Characteristics

The discharge characteristics were examined using another one-cell battery. The discharge characteristics were worked out by measuring the voltage value accompanying the evolution of capacity (time). In the present example, capacity was measured after the first charging, and was measured again after the 20-th charging after discharge. The ratio of the 20-th charging capacity with respect to the first charging capacity, i.e. the discharge capacity retention rate, was 86 %.

### Example 2

A process was carried out under the same conditions as in Example 1, but herein the amount of added KB with respect to the starting material substances V₂O₅ and (NH₄)₂HPO₄ was set to 6.005 g (carbon 0.5 moles, i.e. molar ratio x = 1.0). The obtained precursor in the present example is referred to as precursor B, the positive electrode active material as positive electrode active material B and the lithium ion secondary battery as battery B.

The resistivity of the precursor B having VPO₄ as a main component was 8.7 x 10 Ω·cm, the carbon amount contained in the positive electrode active material B was 2.5 wt%, and the resistivity of the positive electrode active material B was 4.8 x 10 Ω·cm. The discharge capacity of the lithium ion secondary battery B was 132 mAh/g per active material, and the discharge capacity retention rate was 88 %.

### Example 3

A process was carried out under the same conditions as in Example 1, but herein the amount of added KB with respect to the starting material substances V₂O₅ and (NH₄)₂HPO₄ was set to 9.0075 g (carbon 0.75 moles, i.e. molar ratio x = 1.5). The obtained precursor in the present example is referred to as precursor C, the positive electrode active material as positive electrode active material C and the lithium ion secondary battery as battery C.

The resistivity of the precursor C having VPO₄ as a main component was 2.6 × 10 Ω·cm, the carbon amount contained in the positive electrode active material C was 3.9 wt%, and the resistivity of the positive electrode active material C was 1.3 × 10 Ω·cm. The discharge capacity of the lithium ion secondary battery C was 131 mAh/g per active material, and the discharge capacity retention rate was 92 %.

Comparative Examples are explained below.

### Comparative Example 1

A process was carried out under the same conditions as in Example 1, but herein the amount of added KB with respect to the starting material substances V₂O₅ and (NH₄)₂HPO₄ was set to 18.015 g (carbon 1.5 moles, i.e. molar ratio x = 3.0). The obtained precursor in the present comparative example is referred to as precursor D, the positive electrode active material as positive electrode active material D and the lithium ion secondary battery as battery D.

The resistivity of the precursor D having VPO₄ as a main component was 6.5 Ω·cm, the carbon amount contained in the positive electrode active material D was 7.6 wt%, and the resistivity of the positive electrode active material D was 4.3 Ω·cm. The discharge capacity of the lithium ion secondary battery D was 131 mAh/g per active material, and the discharge capacity retention rate was 92 %.

### Comparative Example 2

A process was carried out under the same conditions as in Comparative Example 1, but herein 3.0025 g of carbon black (CB: specific surface area 161 m²/g) (carbon 0.25 moles, i.e. molar ratio x = 0.5) were added, instead of KB, to the starting material substance V₂O₅ and (NH₄)₂HPO₄. In the present comparative example, the obtained positive electrode active material is referred to as positive electrode active material precursor E and the lithium ion secondary battery as battery E.

The resistivity of the precursor E having VPO₄ as a main component was 5.1 × 10⁹ Ω·cm, the carbon amount contained in the positive electrode active material E was 0.9 wt%, and the resistivity of the positive electrode active material E was 3.7 × 10⁹ Ω·cm. The discharge capacity of the lithium ion secondary battery E was 96 mAh/g per active material, and the discharge capacity retention rate was 77 %.

### Comparative Example 3

A process was carried out under the same conditions as in Comparative Example 2, but herein the amount of added CB with respect to the starting material substances V₂O₅ and (NH₄)₂HPO₄ was set to 6.005 g (carbon 0.5 moles, i.e. molar ratio x = 1.0). The obtained precursor in the present comparative example is referred to as precursor F, the positive electrode active material as positive electrode active material F and the lithium ion secondary battery as battery F.

The resistivity of the precursor F having VPO₄ as a main component was 1.1 × 10¹⁰ Ω·cm, the carbon amount contained in the positive electrode active material F was 2.3 wt%, and the resistivity of the positive electrode active material F was 5.7 x 10⁹ Ω·cm. The discharge capacity of the lithium ion secondary battery F was 101 mAh/g per active material, and the discharge capacity retention rate was 78 %.

### Comparative Example 4

A process was carried out under the same conditions as in Comparative Example 1, but herein the amount of added CB with respect to the starting material substances V₂O₅ and (NH₄)₂HPO₄ was set to 9.0075 g (carbon 0.75 moles, i.e. molar ratio × = 1.5). The obtained precursor in the present comparative example is referred to as precursor G, the positive electrode active material as positive electrode active material G and the lithium ion secondary battery as battery G.

The resistivity of the precursor G having VPO₄ as a main component was 1.2 × 10³ Ω·cm, the carbon amount contained in the positive electrode active material G was 3.9 wt%, and the resistivity of the positive electrode active material G was 7.2 × 10⁸ Ω·cm. The discharge capacity of the lithium ion secondary battery G was 107 mAh/g per active material, and the discharge capacity retention rate was 79 %.

### Comparative Example 5

A process was carried out under the same conditions as in Comparative Example 1, but herein the amount of added CB with respect to the starting material substances V₂O₅ and (NH₄)₂HPO₄ was set to 12.8507 g (carbon 1.07 moles, i.e. molar ratio x = 2.14). The obtained precursor in the present comparative example is referred to as precursor H, the positive electrode active material as positive electrode active material H and the lithium ion secondary battery as battery H.

The resistivity of the precursor H having VPO₄ as a main component was 3.2 × 10 Ω·cm, the carbon amount contained in the positive electrode active material H was 5.6 wt%, and the resistivity of the positive electrode active material H was 5.3 × 10⁷ Ω·cm. The discharge capacity of the lithium ion secondary battery H was 113 mAh/g per active material, and the discharge capacity retention rate was 81 %.

### Comparative Example 6

A process was carried out under the same conditions as in Comparative Example 1, but herein the amount of added CB with respect to the starting material substances V₂O₅ and (NH₄)₂HPO₄ was set to 14.6522 g (carbon 1.22 moles, i.e. molar ratio x = 2.44). The obtained precursor in the present comparative example is referred to as precursor I, the positive electrode active material as positive electrode active material I and the lithium ion secondary battery as battery I.

The resistivity of the precursor I having VPO₄ as a main component was 1.3 × 10 Ω·cm, the carbon amount contained in the positive electrode active material I was 6.4 wt%, and the resistivity of the positive electrode active material I was 3.5 × 10⁴ Ω·cm. The discharge capacity of the lithium ion secondary battery I was 119 mAh/g per active material, and the discharge capacity retention rate was 84 %.

### Comparative Example 7

A process was carried out under the same conditions as in Comparative Example 1, but herein the amount of added CB with respect to the starting material substances V₂O₅ and (NH₄)₂HPO₄ was set to 18.015 g (carbon 1.5 moles, i.e. molar ratio x = 3.0). The obtained precursor in the present comparative example is referred to as precursor J, the positive electrode active material as positive electrode active material J and the lithium ion secondary battery as battery J.

The resistivity of the precursor J having VPO₄ as a main component was 3.1 × 10 Ω·cm, the carbon amount contained in the positive electrode active material J was 7.5 wt%, and the resistivity of the positive electrode active material J was 3.3 Ω·cm. The discharge capacity of the lithium ion secondary battery J was 126 mAh/g per active material, and the discharge capacity retention rate was 88 %.

The results of the examples and comparative examples are appraised next.

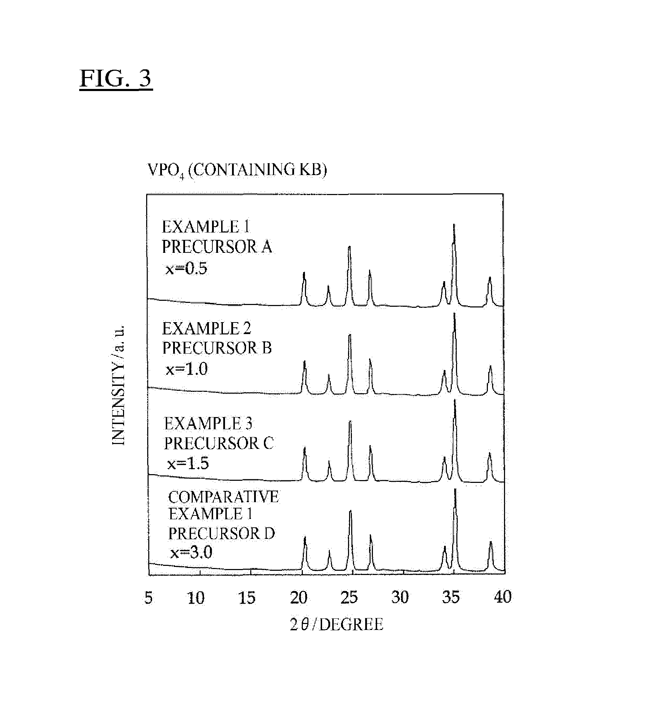

FIG. 3 illustrates XRD measurement results of the precursors A to C in Examples 1 to 3 and the precursor D in Comparative Example 1. Specifically, the figure illustrates analysis results of the precursors A to D obtained by adding KB, as the carbon material, to the starting material substances.

As illustrated in the figure, the position and size of the peaks of the precursors A to C and the precursor D coincide substantially with each other. These coinciding peaks denote the crystal structure of VPO₄. This indicates, therefore, that the main component of the precursors A to C in Examples 1 to 3 and the precursor D in Comparative Example 1 is VPO₄.

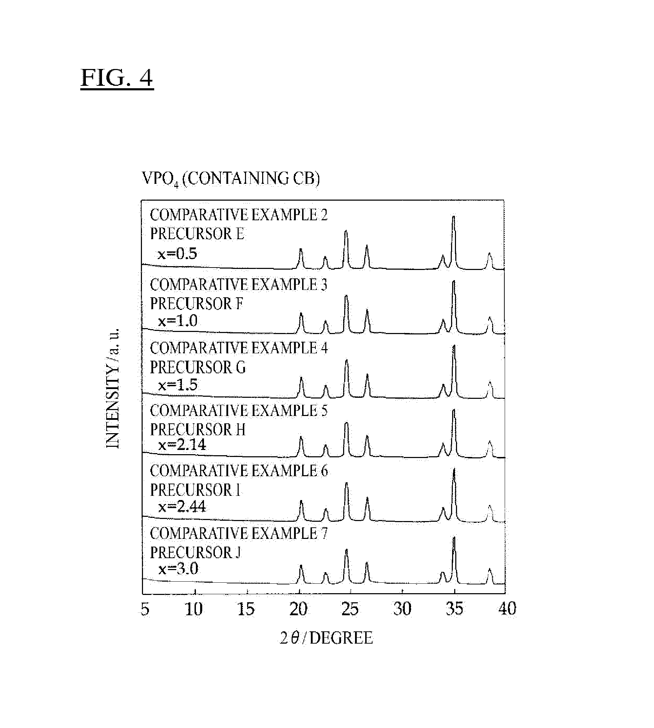

FIG. 4 illustrates XRD measurement results of the precursors E to J of Comparative Examples 2 to 7. Specifically, the figure illustrates analysis results of the precursors E to J obtained by adding CB, as the carbon material, to the starting material substances. The peaks of the precursors E to J share the peak positions of the precursors A to D in FIG. 3. This indicates that the precursors E to J as well have VPO₄ as a main component.

As shown in FIG. 3, even though the addition amount of KB is small (molar ratio x = 0.5 to 1.5) in the precursors A to C of Examples 1 to 3, the precursors A to C exhibit peaks of substantially the same size as those of the precursor D of Comparative Example 1, in which the addition amount of KB is substantial. This indicates that the crystal structure of the precursor becomes stabilized when the carbon material is KB, even if the addition amount of the latter is somewhat small.

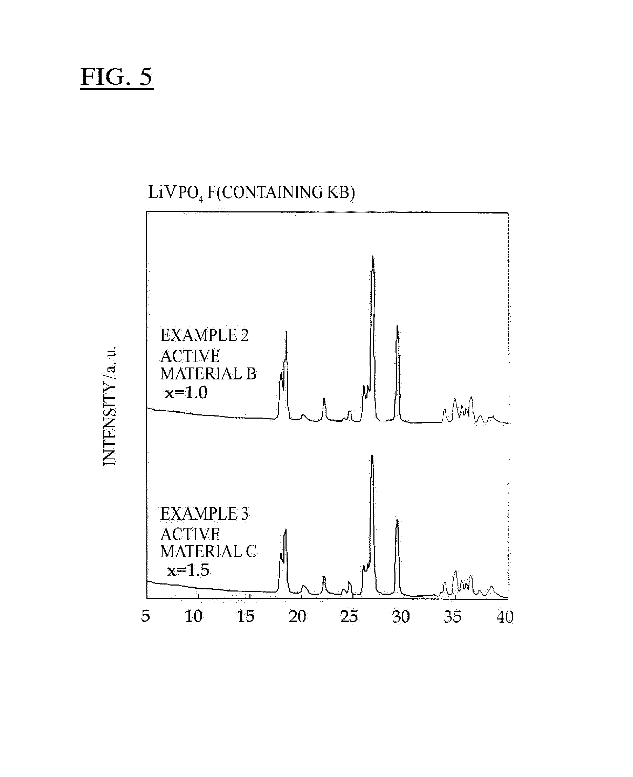

FIG. 5 illustrates XRD measurement results for the positive electrode active materials B and C in Examples 2 and 3. Specifically, the figure illustrates analysis results of the positive electrode active materials B and C obtained by adding KB, as the carbon material, to the starting material substances.

As the figure shows, the positions and sizes of the peaks for the positive electrode active materials B and C coincide substantially with each other. These coinciding peaks denote the crystal structure of LiVPO₄F. This reveals, therefore, that the main component in the positive electrode active materials B and C in Examples 2 and 3 is LiVPO₄F. The XRD measurement results of the positive electrode active material A in Example 1 is not shown in the figures, but is substantially identical to the XRD measurement results for the positive electrode active materials B and C in Examples 2 and 3.

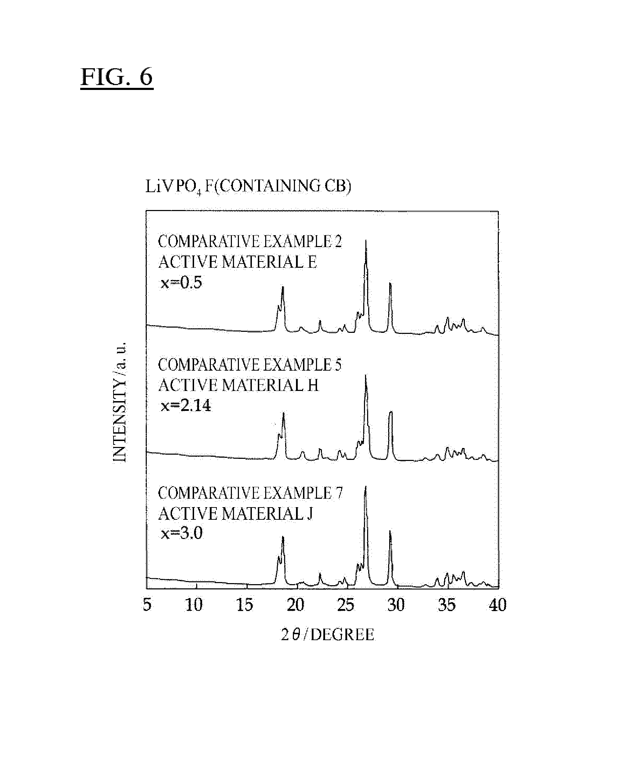

FIG. 6 illustrates XRD measurement results of the positive electrode active materials E, H and J of Comparative Examples 2, 5 and 7, respectively. Specifically, the figure illustrates analysis results of the positive electrode active materials obtained by adding CB, as the carbon material, to the starting material substances. The peaks in the positive electrode active materials E, H and J share the peak positions of the positive electrode active materials B and C in FIG. 5. This indicates that the positive electrode active materials E, H and J as well have LiVPO₄F as a main component.

The various numerical values of measurement results of the examples and comparative examples are given in Table 1,

**Table 1**

| | Carbon material | Addition amount (x) | Carbon content in LiVPO₄F (wt%) | Resistivity of VPO₄ (Ω·cm) | Resistivity of LiVPO₄F (Ω·cm) | Discharge capacity (mA/g) | Discharge capacity retention rate (%) |
|---|---|---|---|---|---|---|---|
| Example 1 | KB | 0.5 | 0.9 | 1.2 × 10¹⁰ | 6.1 × 10⁹ | 100 | 86 |
| Example 2 | KB | 1 | 2.5 | 8.7 × 10 | 4.8 × 10 | 132 | 88 |
| Example 3 | KB | 1.5 | 3.9 | 2.6 × 10 | 1.3 × 10 | 131 | 92 |
| Comp. Ex. 1 | KB | 3 | 7.6 | 6.5 | 4.3 | 131 | 92 |
| Comp. Ex. 2 | CB | 0.5 | 0.9 | 5.1 × 10⁹ | 3.7 × 10⁹ | 96 | 77 |
| Comp. Ex. 3 | CB | 1 | 2.3 | 1.1 × 10¹⁰ | 5.7 × 10⁹ | 101 | 78 |
| Comp. Ex. 4 | CB | 1.5 | 3.9 | 1.2 × 10³ | 7.2 × 10⁸ | 107 | 79 |
| Comp. Ex. 5 | CB | 2.1 | 5.6 | 3.2 × 10 | 5.3 × 10⁷ | 113 | 81 |
| Comp. Ex. 6 | CB | 2.4 | 6.4 | 1.3 × 10 | 3.5 × 10⁴ | 119 | 84 |
| Comp. Ex. 7 | CB | 3 | 7.5 | 3.1 × 10 | 3.3 | 126 | 88 |

As Table 1 reveals, when the addition amount x of CB as the carbon material ranges from 0.5 to 2.4 (Comparative Examples 2 to 6), the resistivity of the positive electrode active material LiVPO₄F is very high, of the order of 10⁴ to 10⁹ Ω·cm, and it may be impossible to achieve the required conductivity in order for the positive electrode active material to function as such. Actually, the discharge capacity in the positive electrode active materials of Comparative Examples 2 to 6 ranges from about 96 to 119 mAhg⁻¹, and the discharge capacity retention rate is low, of about 77 to 84 %. Therefore, it is found that the addition amount x of CB must be at least greater than 2.4 in a case where CB is added as the carbon material. In the light of the trend observed in Examples 1 to 3 and Comparative Example 1, it is found, on the other hand, that the discharge capacity becomes saturated, at about 130 mAh/g, upon an increase in the carbon that is comprised in the positive electrode active material. Increasing the amount of carbon in the positive electrode active material, however, entails a reduction of the proportion of LiVPO₄F that contributes to charging and discharge capacity, and is thus a disadvantageous approach in terms of enhancing energy density.

In Examples 2 to 3, by contrast, KB is added as the carbon material; as a result, the resistivity of the positive electrode active material LiVPO₄F is of the order of 10¹ Ω·cm, even if the addition amount x of KB is about 1.0 to 1.5. These values are sufficiently lower than those for Comparative Examples 2 to 6. Therefore, the positive electrode active material LiVPO₄F of the examples exhibits the required conductivity for functioning as a positive electrode active material. Actually, the discharge capacity of the positive electrode active materials in Examples 2 to 3 takes on a high value, of about 130 mAhg⁻¹, and the discharge capacity retention rate as well takes on high-level values, of about 88 to 92 %.

As a result, the required conductivity can be imparted to the positive electrode active material LiVPO₄F in a case where KB is added as the carbon material, as in the examples, even if the addition amount x of KB is comparatively small, of about 1.0 to 1.5. It is deemed that the reason why sufficient conductivity can be obtained, even though the addition amount is thus small, derives from the higher specific surface area (700 to 1500 m²/g) of KB as compared to that of CB (100 to 200 m²/g). This translates into more particles per unit weight, so that a good conductive circuit can be formed even with small amounts of KB.

Therefore, a positive electrode active material can be produced that preserves high performance in terms of discharge capacity and discharge retention rate, while preventing drops in capacity caused by addition of excessive carbon material. In a case where the addition amount x of KB is 3.0 (Comparative Example 1), the discharge capacity is comparatively high, of about 131 mAhg⁻¹, and the discharge capacity retention rate takes on likewise a high value, of 92 %. If the addition amount x of KB takes on a value greater than 2.0, however, the amount of binder must be increased in order to obtain a good slurry, on account of the high specific surface area of KB. The proportion of active material in the electrode drops as a result, which is unfavorable in terms of achieving higher energy density. Preferably, therefore, the addition amount x is set to be smaller than 2.

If the addition amount x of the carbon material is set to be smaller than 0.5, on the other hand, resistivity increases, and the capacity and cycle characteristic may be impaired as a result. Therefore, the addition amount x of KB is preferably increased beyond 0.5.

The present invention is not limited to the above embodiments, and may accommodate various modifications without departing from the scope of the invention. The vanadium pentoxide and phosphate compound that are the starting material used in the embodiments may include various other constituent elements in amounts that do not significantly alter the fundamental properties of the foregoing starting material substances. Various types of binder, solvent and so forth can be used for preparing the electrodes, depending on the circumstances.

## Claims

1. A production method of a positive electrode active material having a LiVPO₄F-type crystal structure and containing carbon,
the production method comprising:
a step of synthesizing a precursor that has VPO₄ containing carbon,
from a starting material in the form of vanadium pentoxide and a phosphate compound, and from a carbon material as an additive; and
a step of synthesizing LiVPO₄F containing carbon, from the precursor and LiF, wherein
the carbon material as an additive is conductive carbon black having a specific surface area of 700 to 1500 m²/g, and
in the step of synthesizing the precursor, an addition amount of the conductive carbon black is less than 2 moles per mole of vanadium pentoxid or in the step of synthesizing a precursor, conductive carbon black is added such that in the step of synthesizing LiVPO₄F, the carbon amount contained in LiVPO₄F is not greater than 5 wt% with respect to LiVPO₄F.

2. A positive electrode, comprising a positive electrode active material obtainable in accordance with the production method according to claim 1.

3. A storage device,
comprising a the positive electrode according to claim 2.
